Europäisches Patentamt

(19) European Patent Office

Office européen des brevets

(11) Publication number: **0 039 725**

**B1**

(12) **EUROPEAN PATENT SPECIFICATION**

(45) Date of publication of patent specification: 08.08.84

(51) Int. Cl.³: **G 11 B 7/02,** G 11 B 7/04, **G 11 B 7/12**

(21) Application number: 80902336.9

(22) Date of filing: 24.10.80

(86) International application number:
PCT/US80/01426

(87) International publication number:
WO 81/01217 30.04.81 Gazette 81/11

(54) FLUORESCENT SOUNDTRACK READOUT SYSTEM.

<table>
<tr><td>

(30) Priority: 26.10.79 US 88471

(43) Date of publication of application:
18.11.81 Bulletin 81/46

(45) Publication of the grant of the patent:
08.08.84 Bulletin 84/32

(84) Designated Contracting States:
CH DE FR GB LI

(56) References cited:
US - A - 1 260 337
US - A - 2 031 971
US - A - 2 244 733
US - A - 2 595 701
US - A - 2 678 254
US - A - 3 001 030
US - A - 3 359 376

THE BKSTS JOURNAL, vol. 61, no. 3, March 1979 LONDON (GB) J. ALDRED: "FILM-SOUND - past, present and in the future" pages 66, 68 and 70

</td><td>

(73) Proprietor: CUSTER, Peter Anderson
85 Red Hill Road
Princeton, NJ 08540 (US)
(73) Proprietor: BIRD, George R.
85 Red Hill Road
Princeton, NJ 08540 (US)

(72) Inventor: CUSTER, Peter Anderson
85 Red Hill Road
Princeton, NJ 08540 (US)
Inventor: BIRD, George R.
85 Red Hill Road
Princeton, NJ 08540 (US)

(74) Representative: Allen, Oliver John Richard et al,
Lloyd Wise, Tregear & Co. Norman House 105-109 Strand
London, WC2R 0AE (GB)

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is directed to a system capable of detecting a digital soundtrack coded in fluorescent material on the surface of motion picture film.

From an article in the BKSTS Journal Volume 61 No. 3 of March 1979 entitled "Film Sound — past, present and in the future?" by John Aldred describing a fluorescent sound film idea of the inventors of the present application, it is known to provide a film with impressions each representing a bit of digital information, the impressions being fluorescent. The film is passed through a specially designed track box where ultraviolet light is projected on the film to cause the impressions on the film to emit visible light. The ultraviolet light is projected via a dichroic mirror through a lens and onto a film. The emitted visible light passes back through the lens, through the dichroic mirror and onto a photodiode detector array, a computer then analyses the detected visible light and translates this into sound.

The known art previous to fluorescent sound film sometimes accomplishes multiple sound source effects by using separate, but synchronously run, film strips or magnetic tapes. These systems present serious technical problems such as maintaining sound and image synchronization between the two separately run systems, especially when the strip or tape of one of the two systems has a section removed because of repair or for other reasons. This film may be of the standard 16mm, 35mm or 70mm size. A problem with the system disclosed in the above article by J. Aldred is that the optical requirements in which the ultraviolet and visible light beams follow a similar path would require in practice a dimensionally very awkward read-out device.

Accordingly the present invention is characterised by a first and a second totally reflecting mirror, so positioned and constructed as to direct the ultraviolet light beam from said dichroic mirror through said lens onto the first reflecting mirror onto the second reflecting mirror and thence onto said material to cause the visible light to be emitted and to pass the visible light back along a similar path to the dichroic mirror and thence to said detector, and by the dichroic mirror and second reflecting mirror being either contained within or closely adjacent said ultraviolet and visible light transmitting lens.

The present invention provides a practical arrangement whereby the dimensional problems of the arrangement shown in the above cited article are overcome.

Preferably the read out system includes a film having imprinted thereon a digitally coded soundtrack comprising a material which is visible light transparent and which emits visible light when exposed to ultraviolet light.

The film may have a plurality of digital soundtracks imaged in a transparent, substantially colorless material which can be excited to fluorescence by ultraviolet light, superimposed over the actual image area. One ultraviolet soundtrack exciter source serves to energize, or cause to fluoresce, all of the soundtracks.

Because of the limited quality of optical and magnetic analog soundtracks in standard use the motion picture industry has been unable to effectively reproduce the detailed realism, presence and aural excitement achieved with high fidelity systems at home and at discotheques and concerts. The accuracy of sound reproduction accepted as standard on records and tapes cannot physically be contained in the analog optical track standardized 50 years ago in cramped and grainy space alongside Edison's inchwide picture. Within this decade, given digital recording, the art of high fidelity sound reproduction will improve still further, putting the film industry in worse jeopardy of failing to provide sound of equal fidelity.

Digital coding enables complete digital sound handling, including mixing and editing, usually done on magnetic tapes, without tape hiss or noise or degradation of the sound signal accumulating through successive generations of re-recording. With the sound signal reduced to plus/minus ("yes/no") bits and with parity check bits to monitor the entry of errors, the identity of successive reproductions can be assured.

The archaic analog soundtrack is a "picture" of the wave nature of sound and the detail of the analog sound information must inevitably be mixed together with the intrinsic defects of the recording medium. The distortion which is characteristic of the analog recording means and the noise imposed by the coarse silver grains of the film become inseparable from the desired high fidelity sound.

The essential difference in the digital sound record is that the integrity of the sound information exists separate and immune from the physical nature of the recording medium. It is the intent of fluorescent soundtracking to record a plurality of channels of digital sound across the photographic image space of film as transparent and colorless fluorescent digital words. In digital sound recording, the amplitude of the sound wave is "sampled", or measured, at discrete intervals at a clocked constant repetition rate, as, for example, 50,000 samples per sound to record frequencies of up to 20,000 Hz. Each sample is next converted to, for example, 16 bit digital words with one or more parity check bits. The 16 bits of each word used to record the wave amplitude of the sample (the dynamic range) can write any integer between 0 and 65,535. This is considerably more information than can be derived from the compressed amplitude spike of the present standard optical analog soundtrack record that is submerged among silver grains. Following Nyquist's theorem there must be more than two samples taken for each cycle of the highest frequency to be reproduced. Thus, 50,000 samples/sec. (more than 40,000 samples/sec.) can reproduce 20,000 Hz sound.

The appended drawings illustrate certain exemplary embodiments of the present invention:

Fig. 1 presents a sectional view of a portion of a motion picture projection system showing one fluorescent soundtrack readout system of the invention,

Figure 2 illustrates the relationship between the photodiode detector array and several digital indicia,

Figure 3 illustrates a partial lateral section of a film having a soundtrack for use in the invention, and

Figure 4 presents a sectional view of a portion of a motion picture projection system showing another fluorescent soundtrack readout system of the invention.

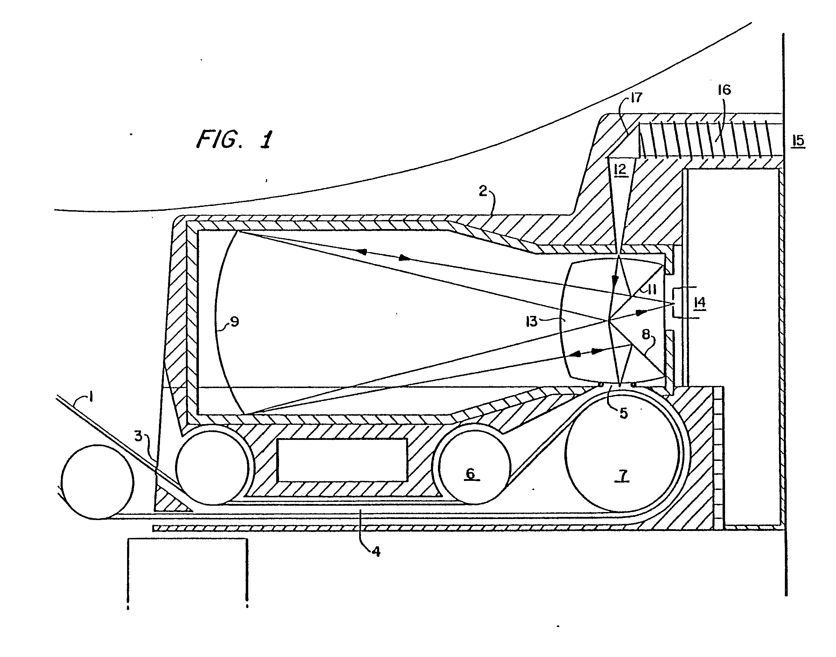

In Fig. 1 a sectional view of a motion picture projection system having the fluorescent soundtrack readout system of the invention is shown. As noted above, the system functions by exposing the fluorescent soundtrack to ultraviolet light and detecting fluorescence in the visible light spectrum from the compounds representing the soundtrack data matrix. The fluorescence is simultaneous to $3 \times 10^{-9}$ seconds with the irradiation. The film 1 is fed into the read-out stage through slit 3 which allows only minimal light to enter the readout stage. In the embodiment of Fig. 1 the angle of the film path around the sound drum and the fact that outside light is blocked by the film in multiple reflections in the narrow slit path 4 keeps stray light from getting to the readout point 5. The access to the film path can be closed by a light-tight cover after threading the film. Optics and electronics are isolated from the film path and sealed to keep out dust and debris.

The second guide roller 6 internal to the readout system is flanged to secure the lateral film position around the sound drum 7 and is spring-loaded downward to tightly wrap the film against the sound drum surfaces. The point of focus at readout point 5 is critical while lateral weave is not.

The sound drum 7 is relatively large so that the film plane is relatively flat at readout point 5 and is freerunning with a flywheel mass contained inside the projection cabinet. The readout point 5 is the position on the sound drum 7 at which the digital soundtrack image is exposed to ultraviolet light and the visible light representing the data matrix is emitted from the film surface. No physical contact occurs during this purely optical reading operation so problems of abrasion and image degradation are minimal. A beam of ultraviolet light formed by an intense remote source 15 such as a mercury arc or xenon projection lamp is funneled along light pipe 16 comprised of a fluid filled plastic tube, as, for example, the tube disclosed in U.S. Patent No. 4,045,119, or a fiber optic ultraviolet conducting material. Where a fluid filled tube is used the fluid must be a good ultraviolet light transmitter and not susceptible to ultraviolet light degradation. The ultraviolet light beam is then focused by, for example, a quartz light funnel 12 and projected by means of lens block 13, internal mirror 11, concave mirror 9, and internal mirror 8 onto the film soundtrack at readout point 5.

The circular entrance aperture (not shown) of the light pipe is filled with an image of the light source entering with an angular cone at least as large as the final lens aperture. For example, f:2.0 corresponds to an angular cone whose angle from the central ray (and cone axis) to the extreme ray has a tangent of 1/2f or 0.25 air. This corresponds to 14/04°, or to a smaller angle of 9.31° inside a representative light pipe having an interior refractive index of 1.5 (a value common to many less dense glasses and organic materials). It is important that the entrance aperture be really filled with light, but image quality is no object and moderate aberrations are permitted in the condenser lens (also now shown). Optionally, an ultraviolet light transmitting, visible light rejecting filter may precede the entry to the light pipe. The cross-sectional area of the light pipe entrance must be considerably larger than the area of the output line of funnel 12.

The ultraviolet light is reflected from light pipe 16 to funnel 12 by diagonal reflector 17 preferably made of a polished surface with a multilayer interference reflector on its surface. Below the diagonal reflector 17 the round section opens slowly and smoothly into a very long, thin line of length 25 mm (as wide as the film width between sprocket holes). It is imperative that the surface of the funnel be smooth (either fire-polished or optical polished) so that little ultraviolet light is lost through scattering at surface scratches.

The end of the light funnel is ground to an optical flat surface, and is covered with a slit mask which leaves open an area roughly 30 micrometers × 25 mm. This is deliberately made a bit wider than the reading area on the photodiode array (16 micrometers) to allow for any minor imperfections of focus or light nonuniformity, since the goal is primarily to illuminate the film with intense ultraviolet light.

At the narrow air gap between the lens block and the funnel the end surfaces are given an antireflection coat to minimize reflection losses. A single quarter-wavelength coating of $MgF_2$ would suffice (with n = 1.38 the reflection loss is reduced below 1% per surface). For the ultraviolet light transmitting portion of the system, the wavelength of peak action is roughly 360 nm, so the desired coating thickness if 360 nm/(4 × 1.38) = 65.2 nm. The wavelength band of low reflection loss is quite wide, but for bifunctional surfaces, such as 13 and the block surface above 5, which pass both visible and ultraviolet light, it is preferable to use a three layer evaporated antireflection coat. If not, the anti-reflection peak would be set around 400—420 nm. This value, and especially the desired antireflection peak for the visible transmitting surfaces cannot be fixed exactly until the final brightener chromophore is chosen, since the wavelength distribution of emitted fluorescence will vary from one brightener compound to another.

The lens block 13 is a longer wavelength (>320 nm) ultraviolet and visible light transmitting glass block with cornering reflecting surfaces 8 and 11 internal to the block. Dichroic mirror surface 11 comprises a tuned reflection/antireflection multilayer which reflects ultraviolet light and transmits visible light. The thicknesses of the layers are chosen so as to position the sharp crossover from reflection to transmission at about 410 nm, or to a more appropriate wavelength to be fixed after the final choice of brightener compound. Concave mirror 9 and internal mirror 8 are coated with broad band ultraviolet-visible multilayer light reflecting coats.

The ultraviolet light entering the top of the lens block 13 is reflected by mirror surface 11 to concave mirror 9 and onto mirror surface 8 which in turn projects the beam onto the surface of the film at readout point 5. The visible light fluorescence emitted from the film sound-track data matrix makes a similar return path through the lens block 13 and off concave mirror 9 until it converges through the dichroic mirror 11. Here the visible radiation continues through and exits the lens block to arrive at a focal plane on the surface of the photodiode array 14. The photodiode array is fabricated with a limiting slit of width 16 micrometers over the light sensitive elements.

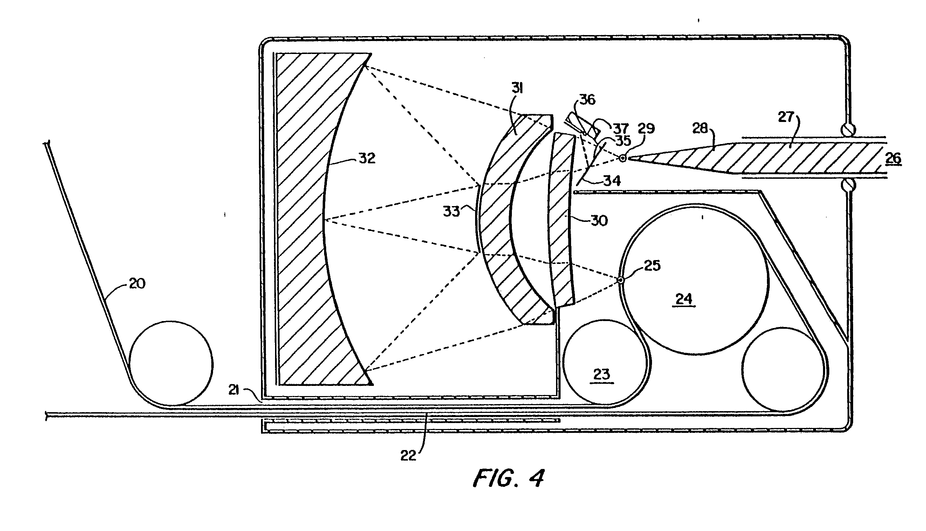

Figure 4 presents a sectional view of a motion picture projection system having another fluorescent soundtrack readout system of the invention.

The film feeding and handling parts of the system are essentially the same as in the embodiment of Fig. 1. The film 20 is fed into the soundtrack readout stage through a slit 21 and then through a narrow film path 22. As above, the system is designed to be light-tight and dust free. The first guide roller 23 within the readout stage is flanged to adjust the lateral film position and is spring-loaded to apply tension to the film to keep it tightly wrapped around the sound drum 24. Readout point 25 is relatively flat owing to the relatively large diameter of sound drum 24. The readout point 25 is the position on the film which is exposed to ultraviolet light, causing fluorescence of the digital soundtrack images printed thereon.

The ultraviolet light enters from an intense remote source 26 and is funneled along light pipe 27 and focused by, for example, a quartz light funnel 28 at focal point 29. The light pipe and quartz light funnel may be of conventional design as discussed in the description of Fig. 1.

Briefly, the ultraviolet light beam is projected from focal point 29 by means of correcting lens 30, central lens 31, concave mirror 32 and convex mirror 33 onto the readout point 25. Note that 33 is a central, reflectively coated section of the surface of lens 31.

In greater detail, an ultraviolet light ray from focal point 29 passes through the flat glass body of the dichroic beam splitter 34 and continues with very little deflection through correcting lens 30 to correct chromatic and other aberrations. The ray then passes through central lens 31 which deflects the ray upward and onto the surface of concave mirror 32 from which it is reflected downward onto convex mirror 33 and then back to concave mirror 32. From concave mirror 32 it is reflected back through central lens 31 and correcting lens 30 and finally onto readout point 25.

The visible light emitted by the fluorescent images on the film at readout point 25 retrace a similar path through the mirror/lens system until it reaches the dichroic beam splitter 34. At this point, visible light reflected from the second reflection from concave mirror 32 toward focal point 29 first meets the multilayer dichroic reflector 35 (of the dichroic beam splitter 34), and never enters the body of the dichroic element. It is necessary that the visible light does not pass through a tilted, planar element (the body of the dichroic element) as this would introduce serious image aberrations. The visible light is reflected from the dichroic reflector 35 ultimately to the photodiode array 36. Design considerations may require an intermediate reflection, as depicted in Fig. 4 at diagonal mirror surface 37. From surface 37 the converging rays are incident normal to the surface of the detector.

In the above-described embodiments the overall purpose is to flood a line image of length roughly 24 millimeters and width roughly 30 micrometers on the film with ultraviolet exciting light. The ultraviolet excited visible fluorescence generates a signal output on a matching 1:1 line at the detector. Since both exciting and collecting require a large angular cone, the lens is advantageously bifunctional, imaging ultraviolet and collecting visible light in the same, maximal cone.

The line scanning photodiode array is mounted on a circuit board that contains those electronic functions that must be in close proximity to the array. The data bit stream from the arrays and circuit boards on each of several projectors is fed to a single master computer that thus suffices for all of the projectors in the projector booth. This master computer has data error sensing and correcting, digital-to-analog converters, and six channel amplifier electronics. Exemplary of the photodiode array suitable for use in the present invention is the Reticon FL—1728H or RL—1024H, two high resolution solid state image sensors designed for facsimile and related applications (available from Reticon Corporation, Sunnyvale, California). These silicon integrated circuits contain a row of 1728 or 1024 photodiodes on 15 micrometer centers, together with shift register scanning circuits for sequential output.

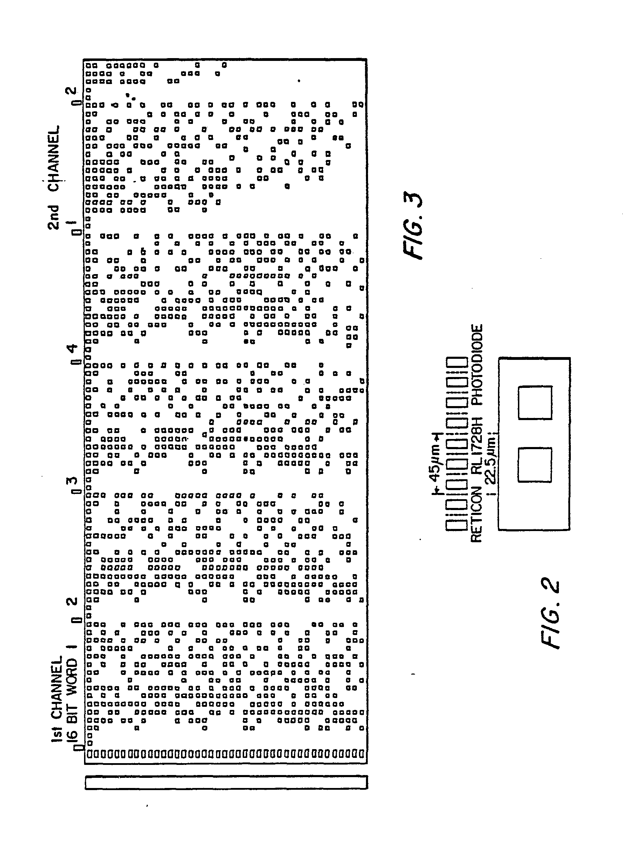

It is assumed that the film will weave slowly from side to side by at least 0.005 cm. Thus, it is not possible to allocate a particular detector element of the array to a particular bit. Instead, two or three detector elements are allowed for the full width of each bit and the location of the bit in time and space is determined relative to a reference position line on the film (see Fig. 2). Since the optical system functions at a 1:1 magnification, this provides for a bit width of 30 or 45 micrometers (three detector elements). To minimize the demands on image resolution, it is highly desirable that the bits be roughly square. A sampling rate of 50,000 words per second requires for simple linear reading for a string of laterally written words a bit length of (43.2 cm/sec.)/50,000 bits giving an undesirably compressed bit-length of 8.65 micrometers. Accordingly, we read instead four words across the width of the film in a single track, giving a real-time sampling repetition of clusters of four words at a rate of 12,500/sec. and a bit length of 36.5 micrometers at the conventional 35 mm film speed of 43.2 cm/sec.

Beside the soundtrack is a steady string of dark and fluorescent bars which serve to inform the computer of the positions in time and space (weave) of the digital words. This timing ladder must be wider than the maximum allowable film weave, and is preferably read by separate photodiodes which operate continuously, and thus are not a part of the repeating circuit of the detector photodiode array. These separate photodiodes are located on the same silicon chip as the detector photodiode array but have direct external connections independent of the detector array.

A unique feature of this Reticon detector array is that the elements are always active. A circuit internal to the chip charges the individual elements in rapid succession, and the next reading is obtained from the current required to recharge each element in its turn. On the other hand, it is desired that the individual elements be inactive during the time the boundaries between successive words are passing over the detector elements. This is accomplished by having a "dummy scan" of the detector alternate with each reading scan. This dummy scan is simply not entered into the computer circuits. Thus, the actual scan repetition rate is 25,000 scans/second, with alternate scans being rejected. Further, the rate of reading the scanning pulse passing down the string of detector elements would be too high if the entire six channel (24 word) lateral array were to be scanned by a single detector string having more than 1512 elements. Instead, the single silicon wafer is to contain six separate scanning strings of more than 252 elements each to be scanned in parallel time and to deliver outputs on six parallel lines to the computer.

To provide six channels of digital sound data on a motion picture film, it is desirable to divide the film longitudinally into six channel columns. Each channel column is the width of four words of sixteen bits each. One such channel column is shown fully in Fig. 3. The timing ladder described above is shown as a uniformly repeating series of rectangles near the left edge of the film.

While the Reticon detector array and the description above are preferable embodiments, it is to be understood that other geometric arrays and logical arrangements of data are contemplated as well.

In an alternate embodiment of the invention, the silicon detector array may be replaced by another image detector, such as a conventional television camera tube, a vidicon, for example.

The computer circuitry involved in decoding the digital data bit streams presented herein forms no part of the present invention.

To complete the isolation of the visual projection system from the fluorescence of the soundtrack image an auxiliary ultraviolet absorbing filter may be inserted at any point prior to the film. This will prevent any excitation of the brightener while the visible image is being projected and viewed.

The above descriptions of the preferred embodiments are not to be construed as limiting the scope of the present invention which is more rigorously defined by the appended claims.

**Claims**

1. A fluorescent sound track read out system for use with a film having imprinted thereon a digitally coded soundtrack comprising a material which is visible light transparent and which emits visible light when exposed to ultraviolet light, said system comprising a source of ultraviolet light to provide a beam of ultraviolet light, a dichroic beam splitting mirror, means for directing the ultraviolet light beam at the dichroic mirror for onward transmission to the material and an image detector arranged to detect the visible light as emitted from the material and received at the dichroic mirror, the ultraviolet and visible light passing through a lens, characterised in that a first (9) and a second (8) totally reflecting mirror and said lens (13) are so positioned and constructed as to direct the ultraviolet light beam from said dichroic mirror (11) through said lens onto the first reflecting mirror onto the second reflecting mirror and thence onto said material to cause the visible light to be emitted and to pass the visible light back along a similar path to the dichroic mirror and thence to said detector (14), and in that the dichroic mirror (11) and second reflecting mirror (8) are contained within said ultraviolet and visible light transmitting lens (13).

2. A fluorescent sound track read out system for use with a film having imprinted thereon a digitally coded sound-track comprising a material which is visible light transparent and which emits visible light when exposed to ultraviolet light, said system comprising a source of ultraviolet light to provide a beam of ultraviolet light, a dichroic beam splitting mirror, means for directing the ultraviolet light beam at the dichroic mirror for onward transmission to the material and an image detector arranged to detect the visible light as emitted from the material and received at the dichroic mirror, the ultraviolet and visible light passing through a lens, characterised in that a first (32) and a second (33) totally reflecting mirror and said lens (31) are so positioned and constructed as to direct the ultraviolet light beam from said dichroic mirror (34) through said lens onto the first reflecting mirror onto the second reflecting mirror and thence onto said material to cause the visible light to be emitted and to pass the visible light back along a similar path to the dichroic mirror and thence to said detector (36), and in that the dichroic mirror (34) and second reflecting mirror (33) are closely adjacent said ultraviolet and visible light transmitting lens (31).

3. A read out system as claimed in Claim 2 wherein said second reflecting mirror (33) is a central, reflectively coated section of the surface of said lens (31).

4. A read out system as claimed in Claim 2 or 3 wherein the second reflecting mirror (33) is convex.

5. A read out system as claimed in any one of Claims 2 to 4 wherein a correcting lens (30) is associated with the first lens (31) so as to correct light passing from and to the first lens.

6. A read out system as claimed in any preceding Claim wherein said means (12, 28) for directing the ultraviolet light beam is arranged to direct the beam along an axis to the dichroic mirror substantially parallel or coaxial to the axis of the beam as it strikes the film (1, 20).

7. A read out system as claimed in any preceding Claim wherein the first reflecting mirror (9, 32) is concave.

8. A read out system as claimed in any preceding Claim including a film (1, 20) having imprinted thereon a digitally coded soundtrack comprising a material which is visible light transparent and which emits visible light when exposed to ultraviolet light.

9. A read out system as claimed in Claim 8 wherein the film has six sound channel columns.

10. A read out system as claimed in either Claim 8 or 9 wherein the film has a plurality of sound channel columns each column being the width of four words of sixteen bits each.

11. A read out system as claimed in any one of Claims 8 to 10 wherein the film comprises a plurality of sound-track imprintations each forming a bit of the digital code, each imprintation being substantially square.

12. A read out system as claimed in any preceding Claim wherein the ultraviolet and visible light transmitting lens (13, 30) transmits ultraviolet and visible light having a wavelength greater than 320 nm.

13. A read out system as claimed in any preceding claim wherein the overall optical system provides a 1:1 magnification.

**Patentansprüche**

1. Fluoreszierendes Tonspur-Ablesesystem für die Verwendung mit einem Film, worauf eine digitalcodierte Tonspur aufgeprägt ist, die aus einem Material besteht, das für sichtbares Licht durchlässig ist und das sichtbares Licht abgibt, wenn es ultraviolettem Licht ausgesetzt ist, wobei das besagte System zur Bereitstellung eines Strahls ultravioletten Lichts eine Quelle ultravioletten Lichts, einen dichroitische Strahlen teilenden Spiegel, Mittel zum Lenken des ultravioletten Lichtstrahls auf den dichroitischen Spiegel zur Weiterübertragung zum Material und einen Bilddetektor umfasst, der so angeordnet ist, dass er das sichtbare Licht erfasst, wie es vom Material abgegeben und am dichroitischen Spiegel empfangen wird, wobei des ultraviolette und sichtbare Licht durch ein Objektiv hindurchtreten, dadurch gekennzeichnet, dass ein erster (9) und ein zweiter (8) totalreflektierender Spiegel und das besagte Objektiv (13) so positioniert und ausgeführt sind, dass sie den ultravioletten Lichtstrahl vom besagten dichroitischen Spiegel (11) durch das besagte Objektiv auf den ersten Umlenkspiegel, auf den zweiten Umlenkspiegel und von dort auf das besagte Material richten, wodurch das sichtbare Licht abgegeben und auf einem ähnlichen Weg zum dichroitischen Spiegel und von dort zum besagten Detektor (14) zurückgeleitet wird, und dass der dichroitische Spiegel (11) und der zweite Umlenkspiegel (8) im besagten, für ultraviolettes und sichtbares Licht durchlässigen Objektiv (13) aufgenommen sind.

2. Fluoreszierendes Tonspur-Ablesesystem für die Verwendung mit einem Film, worauf eine digitalcodierte Tonspur aufgeprägt ist, die aus einem Material besteht, das für sichtbares Licht durchlässig ist und das sichtbares Licht abgibt, wenn es ultraviolettem Licht ausgesetzt ist, wobei das besagte System zur Bereitstellung eines Strahls ultravioletten Lichts eine Quelle ultravioletten Lichts, einen dichroitische Strahlen teilenden Spiegel, Mittel zum Lenken des ultravioletten Lichtstrahls auf den dichroitischen Spiegel zur Weiterübertragung zum Material und einen Bilddetektor umfasst, der so angeordnet ist, dass er das sichtbare Licht erfasst, wie es vom Material abgegeben und am dichroitischen Spiegel empfangen wird, wobei das ultraviolette und sichtbare Licht durch ein Objektiv hindurchtreten, dadurch gekennzeichnet, dass ein erster (32) und ein zweiter (33) totalreflektierender Spiegel und das besagte Objektiv (31) so positioniert und ausgeführt sind, dass sie den ultravioletten Lichtstrahl vom besagten dichroitischen Spiegel (34) durch das besagte Objektiv auf den ersten Umlenkspiegel, auf den zweiten Umlenkspiegel und von dort auf das besagte Material richten, wodurch das sichtbare Licht abgegeben und auf einem ähnlichen Weg zum dichroitischen Spiegel und von dort zum besagten Detektor (36) zurückgeleitet wird, und dass der dichroitische Spiegel (34) und der zweite Umlenkspiegel (33) dem besagten, für ultraviolettes und sichtbares Licht durchlässigen Objektiv (31) nahe benachbart sind.

3. Ablesesystem nach Anspruch 2, dadurch gekennzeichnet, dass der besagte zweite Umlenkspiegel (33) ein zentraler, reflektiv beschichteter Teil der Oberfläche des besagten Objektivs (31) ist.

4. Ablesesystem nach Anspruch 2 oder 3, dadurch gekennzeichnet, dass der zweite Umlenkspiegel (33) konvex ist.

5. Ablesesystem nach einem der Ansprüche 2 bis 4, dadurch gekennzeichnet, dass eine Korrekturlinse (30) dem ersten Objektiv (31) zugeordnet ist, um von und zu dem ersten Objektiv gehendes Licht zu korrigieren.

6. Ablesesystem nach einem der vorhergehenden Ansprüche, dadurch gekennzeichnet, dass besagte Mittel (12, 28) zum Lenken des ultravioletten Lichtstrahls so angeordnet sind, dass der Strahl entlang einer im wesentlichen parallel oder koaxial zur Strahlachse beim Auftreffen auf den Film (1, 20) gelegenen Achse zum dichroitischen Spiegel gelenkt wird.

7. Ablesesystem nach einem der vorhergehenden Ansprüche, dadurch gekennzeichnet, dass der erste Umlenkspiegel (9, 32) konkav ist.

8. Ablesesystem nach einem der vorhergenden Ansprüche, gekennzeichnet durch einen Film (1, 20), worauf eine digitalcodierte Tonspur aufgeprägt ist, die aus einem Material besteht, das für sichtbares Licht durchlässig ist und sichtbares Licht abgibt, wenn es ultraviolettem Licht ausgesetzt wird.

9. Ablesesystem nach Anspruch 8, dadurch gekennzeichnet, dass der Film sechs Tonkanalspalten besitzt.

10. Ablesesystem nach Anspruch 8 oder 9, dadurch gekennzeichnet, dass der Film eine Mehrzahl von Tonkanalspalten besitzt, wobei jede Spalte die Breite von vier Worten mit je sechzehn Bit besitzt.

11. Ablesesystem nach einem der Ansprüche 8 bis 10, dadurch gekennzeichnet, dass der Film eine Mehrzahl von Tonspuraufprägungen umfasst, die jeweils ein Bit des digitalen Codes bilden, wobei jede Aufprägung im wesentlichen rechteckig ist.

12. Ablesesystem nach einem der vorhergehenden Ansprüche, dadurch gekennzeichnet, dass das für ultraviolettes und sichtbares Licht durchlässige Objektiv (13, 30) ultraviolettes und sichtbares Licht mit einer Wellenlänge von mehr als 320 nm durchlässt.

13. Ablesesystem nach einem der vorhergehenden Ansprüche, dadurch gekennzeichnet, dass das gesamte optische System eine Vergrösserung von 1:1 liefert.

**Revendications**

1. Système de lecture de piste sonore fluorescente à utiliser avec un film sur lequel est imprimée une piste sonore à codage numérique comprenant une matière qui est transparente à la lumière visible et qui émet de la lumière visible lorsqu'elle est exposée à de la lumière ultraviolette, ce système comprenant une source de lumière ultraviolette destinée à produire un faisceau de lumière ultraviolette, un miroir dichroïque formant diviseur optique, un dispositif pour diriger le faisceau de lumière ultraviolette sur le miroir dichroïque en vue de sa transmission vers la matière et un détecteur d'image propre à détecter la lumière visible émise par la matière et reçue sur le miroir dichroïque, la lumière ultraviolette et la lumière visible traversant une lentille, caractérisé en ce qu'un premier (9) et un second (8) miroir à réflexion totale et la lentille (13) sont positionnés et construits de manière à diriger le faisceau de lumière ultraviolette du miroir dichroïque (11) à travers la lentille sur le premier miroir réfléchissant, sur le second miroir réfléchissant puis sur la matière afin de faire en sorte que la lumière visible soit émise et soit renvoyée suivant un trajet semblable vers le miroir dichroïque puis vers le détecteur (14), le miroir dichroïque (11) ainsi que le second miroir réfléchissant (8) étant contenus dans la lentille (13) qui transmit la lumière ultraviolette et la lumière visible.

2. Système de lecture de piste sonore fluorescente à utiliser avec un film sur lequel est imprimée une piste sonore à codage numérique comprenant une matière qui est transparente à la lumière visible et qui émet de la lumière visible lorsqu'elle est exposée à la lumière ultraviolette, ce système comprenant une source de lumière ultraviolette destinée à produire un faisceau de lumière ultraviolette, un miroir dichroïque formant diviseur optique, un dispositif pour diriger le faisceau de lumière ultraviolette sur le miroir dichroïque en vue de sa transmission vers la matière et un détecteur d'image propre à détecter la lumière visible émise par la matière et reçue sur le miroir dichroïque, la lumière ultraviolette et la lumière visible traversant une lentille, caractérisé en ce qu'un premier (32) et un second (33) miroir à réflexion totale et la lentille (31) sont positionnés et construits de manière à diriger le faisceau de lumière ultraviolette à partir du miroir dichroïque (34) à travers la lentille sur le premier miroir réfléchissant, sur le second miroir réfléchissant, puis sur la matière afin de faire en sorte que la lumière visible soit émise en renvoyée suivant un trajet semblable vers le miroir dichroïque puis vers le détecteur (36), le miroir dichroïque (34) ainsi que le second miroir réfléchissant (33) étant étroitement adjacents à la lentille (31) transmettant la lumière ultraviolette et la lumière visible.

3. Système de lecture suivant la revendication 2, dans lequel le second miroir réfléchissant (33) est une section centrale de la surface de la lentille (31) qui porte un revêtement réfléchissant.

4. Système de lecture suivant la revendication 2 ou 3, dans lequel le second miroir réfléchissant (33) est convexe.

5. Système de lecture suivant l'une quelconque des revendications 2 à 4, dans lequel une lentille correctrice (30) est associée à la première lentille (31) de manière à corriger la lumière provenant de la première lentille et allant vers celle-ci.

6. Système de lecture suivant l'une quelconque des revendications précédentes dans lequel le dispositif (12, 28) destiné à diriger le faisceau de lumière ultraviolette est conçu pour diriger le faisceau suivant un axe dirigé vers le miroir dichroïque en substance parallèle ou coaxial à l'axe du faisceau lorsqu'il frappe le film (1, 20).

7. Système de lecture suivant l'une quelconque des revendications précédentes, dans lequel le premier miroir réfléchissant (9, 32) est concave.

8. Système de lecture suivant l'une quelconque des revendications précédentes, qui comprend un film (1, 20) sur lequel est imprimée une piste sonore à codage numérique comprenant une matière qui est transparente à la lumière visible et qui émet de la lumière visible lorsqu'elle est exposée à la lumière ultraviolette.

9. Système de lecture suivant la revendication 8, dans lequel le film comporte six colonnes de canaux sonores.

10. Système de lecture suivant l'une ou l'autre des revendications 8 et 9, dans lequel le film comporte plusieurs colonnes de canaux sonores, chaque colonne ayant la largeur de quatre mots de seize bits chacun.

11. Système de lecture suivant l'une quelconque des revendications 8 à 10, dans lequel le film comprend plusieurs impressions de piste sonore formant chacune un bit du code numérique, chaque impression étant en substance carrée.

12. Système de lecture suivant l'une quelconque des revendications précédentes, dans lequel la lentille (13, 30) transmettant la lumière ultraviolette et la lumière visible transmet de la lumière ultraviolette et de la lumière visible d'une longueur d'onde supérieure à 320 nm.

13. Système de lecture suivant l'une quelconque des revendications précédentes, dans lequel l'ensemble du système optique détermine un grossissement de 1:1.

FIG. 1

0 039 725

FIG. 3

FIG. 2

FIG. 4